# EUROPEAN PATENT APPLICATION

(11) **EP 4 835 598 A1**
(43) Date of publication of application: **04.11.2026**
(21) Application number: 25173336.6
(22) Date of filing: 29.04.2025
(51) Int. Cl.: G05B 23/02

(54) **METHOD FOR INDUSTRIAL PLANT OPERATION**

(71) Applicant: ABB SCHWEIZ AG, 5400 Baden (CH)
(72) Inventor: SCHMIDT, Benedikt, 69117 Heidelberg (DE)
(74) Representative: Maiwald GmbH

(57) **Abstract**

The invention provides a method computer-implemented method for industrial plant operation, the method comprising obtaining image data comprising a plurality of frames of a plant monitoring and control graphical user interface, GUI, for an industrial plant, inputting the image data into a multi-modal Neural generative model, the multi-modal Neural generative model generating, based on the image data, a first output comprising an analysis of a change of industrial plant operation as derived from the plurality of frames, including a current frame and a previous frame, thereby providing operational context for a present state of the industrial plant, the multi-modal Neural generative model generating, based on the first output and optionally the image data, a second output comprising an analysis of the present state of the industrial plant taking into account the operational context, the multi-modal Neural generative model generating: user support output including: a representation of the analysis result of the analysis of the change and/or present state and/or suggested user actions associated with the plant operation and/or a query response responsive to a user query associated with the plant operation, and/or control output configured to control automated actions associated with the plant operation, wherein generating the user support output and/or the control output employs retrieval augmented generation, RAG, using a knowledge base associated with the plant operation.

## Description

### FIELD OF THE INVENTION

The invention provides a computer-implemented method for industrial plant operation, a corresponding data processing system, a computer program product, and a computer-readable medium.

### BACKGROUND

Monitoring technical equipment of an industrial plant is often carried out in part by a user. For example, there may be situations in which no automatic resolution of a problem in the industrial plant operation is possible. In these situations, a user (also referred to as an operator) will be prompted to intervene. It is common that a graphical user interface is rendered and output to a user, the graphical user interface showing process and equipment states, e.g. signal levels, and configured to also indicate alarms.

In many cases, industrial plants are complex and several alarms can potentially be issued at the same time. Some alarms may be more pressing than others and require more immediate attention from the user, which may however not be immediately apparent from the graphical user interface. Some users may be able to address this to some degree based on knowledge and experience. However, this is unreliable, such that monitoring of plant operation cannot be reliably ensured. As such, there is a high likelihood that plant operation is sub-optimal and potentially risky.

Thus, it is an object of the present disclosure to provide a method and system allowing for addressing these challenges, particularly allowing for more reliable and/or improved industrial plant operation.

### SUMMARY

The invention provides a method, a data processing system, a computer program product, and a computer-readable medium according to the independent claims.

The present disclosure provides a computer-implemented method for industrial plant operation.

The method comprises obtaining image data comprising one or more frames, particularly a plurality of frames, of a plant monitoring and control graphical user interface, GUI, for an industrial plant.

In the present disclosure, the a plant monitoring and control graphical user interface, GUI, for an industrial plant is to be understood broadly, for example as a GUI providing data about a plant state of the industrial plant and/or allowing interaction with the industrial plant, in particular with an automation system of the industrial plant.

The method comprises inputting the image data into a multi-modal Neural generative model, such as a multi-modal LLM.

The method comprises the multi-modal Neural generative model generating, based on the image data, a first output comprising an analysis of a change of industrial plant operation as derived from the plurality of frames, including at least a current frame and a previous frame, thereby providing operational context for a present state of the industrial plant.

The method comprises the multi-modal Neural generative model generating, based on the first output and optionally the image data, a second output comprising an analysis of the present state of the industrial plant taking into account the operational context.

The method comprises the multi-modal Neural generative model generating user support output including: a representation of the analysis result of the analysis of the change and/or present state and/or suggested user actions associated with the plant operation and/or a query response responsive to a user query associated with the plant operation. Alternatively or in addition, the method comprises the multi-modal Neural generative model generating control output configured to control automated actions associated with the plant operation.

Generating the user support output and/or the control output employs retrieval augmented generation, RAG, using a knowledge base associated with the plant operation. The knowledge base may, for example, comprise a vector store and/or a knowledge graph.

It will be understood that the above allows for addressing the initially described challenges and, for example, improves plant operation and makes it more reliable.

The user support output can ensure that the user addresses the most pressing matters with highest priority without relying on user experience or knowledge. The control output may even allow for addressing some matters without necessarily requiring any user interaction.

It will be understood that the GUI will generally at least in part be generated on the basis of operational data received from the industrial plant operation and monitoring devices, e.g. based on operational parameters and sensor data, from which alarms may be generated, for example. While a possibility for arriving at user support output or control outputs might be to change or improve processing of the operational data, the present disclosure uses the GUI frames for obtaining user support output and/or control output.

This makes the method and system of the present disclosure much more flexible and applicable to various systems, as it does not require knowledge of engineering data related to the industrial plant at hand or specific programming depending on the specific control system of the industrial plant. The method works reliably while being agnostic concerning anything that goes beyond the frames of the GUI. In addition to being very flexible, the method and system also allow for increased data security because it is not necessary to provide engineering data and operational data to the Neural generative model. The Neural generative model may only receive the frames (i.e., image data) and a user and/or system prompt for the first output. For the second output, which relies von RAG, information may be generic technical information (e.g. specifications of components of the industrial plant) or more specific, depending on the application at hand, for example available data, whether the instance is run locally or at a trusted server, or the like.

Irrespective of how specific the information in the knowledge base is, the challenges described in the background section will in any case be addressed.

In the present disclosure, the term industrial plant operation may refer to operation of pieces of equipment (also referred to as components) of an industrial plant. The operation may involve operating the pieces of equipment, for example actuating them (e.g. opening and closing of a valve) and/or starting them and/or shutting them down and/or operating them, e.g. with operation parameters, and/or setting operation parameters and/or changing of operation parameters and/or monitoring (e.g. by sensors) pieces of equipment, and/or controlling, by a control device, any of the above. A user may interact with the industrial plant operation, e.g. perform a user intervention into automatic operation. For example, a user may interact with the industrial plant operation via a user input into a computing system that may then be used for generating control data, and/or by direct interaction with the pieces of equipment, e.g. manually operating a valve.

Image data may comprise one or more images. In particular, the image data may comprise a plurality of frames, for example screenshots, of a graphical user interface. A frame may be considered to be an image in a sequence of images, e.g. a sequence of screenshots of the user interface. The frame(s) of the graphical user interface may be obtained by automatically capturing screenshots of the graphical user interface, in particular at multiple points in time. This can be a screenshot of things visible on the screen, and it can optionall also comprise methods provided by an application of operating system to get a bitmap of the rendered GUI (for example even if it is not shown in the currently visible windows range). Like this for a plant control system GUI with multiple process graphics the tool could also capture all process graphics even if the user is only looking at one in particular.

A current frame may be the frame that is being displayed to a user at the current time. A previous frame may be a frame captured at an earlier time than the current frame. It need not necessarily be the frame directly preceding the current frame. A single previous frame may be employed or multiple previous frames may be employed.

The plant monitoring and control graphical user interface may be a graphical interface showing a current operational state of the industrial system and/or process. The plant monitoring and control graphical user interface may, for example, show pieces of equipment of the industrial system (also referred to as components), their interrelations, their current operational status, operational parameter settings, data based on sensor data from sensors monitoring the operation of the industrial system, signal levels of pieces of equipment, and/or alarms. A graphical user interface may comprise user-interactive elements, for example control elements. The user-interactive elements may, for example, comprise buttons, text-entry elements, user selection elements, and/or navigation elements. At least some of the user-interactive elements may be configured to allow a user to review and/or intervene in the operation of the industrial plant, such as by selecting and/or confirming actions to be executed automatically, e.g. controlled via a plant control system.

The multi-modal large language model, Neural generative model, may be any suitable Neural generative model that can process input comprising image data and textual data. The Neural generative model may, for example, be a pre-trained generative transformer. The Neural generative model, as mentioned above, may for example be a large language model, LLM.

A change of industrial plant operation may, for example, comprise changes in operational parameters of the industrial system and/or sensor data from sensors monitoring the operation of the industrial system. For example, changes may relate to changes in temperature, changes in pressure, changes in tank levels, changes in resource consumption (e.g. power consumption) of a piece of equipment, and/or changes in output of a piece of equipment.

Operational context, in the present disclosure, may, for example, refer to one or more of an alarm and/or warning state of the plant, sensor readings of (particularly the most important to operations) sensors, rate of change of alarms, warnings and sensor readings, unusual combinations of the above-mentioned elements, basic judgement about a good, an acceptable and an inacceptable state of the plant, basic information about the consequences of a situation if it continues, basic information of the impact of modifications on alarms, warnings, sensor readings, and with this the state of the plant.

User support output may be graphical output, in particular output incorporated in the graphical user interface. For example, it may comprise symbols, text, highlights or the like. User support output may optionally at least in part be interactive. User support output may comprise, particularly in addition to visual output, haptic and/or acustic output.

User support output may comprise proactive user support output, i.e., output that was not prompted by a user requesting user support output. Alternatively or in addition, user support output may comprise reactive user support output, i.e., output provided in response to a user request or query. For example, reactive user support output may be a response to a user prompt input into the Neural generative model.

The user support output may comprise a representation of the analysis result of the analysis of the change. For example, such a representation may comprise visual indicator elements, e.g. highlights and or symbols on the graphical user interface, and/or textual information representing the analysis result, e.g. in the form of a response in a chat window and/or as an information box. For example, the textual information may describe how a state of the industrial plant has changed and optionally what this may mean in the current context.

The user support output may comprise a representation of the analysis result present state. For example, such a representation may comprise visual indicator elements, e.g. highlights and or symbols on the graphical user interface, and/or textual information representing the analysis result, e.g. in the form of a response in a chat window and/or as an information box. For example, the textual information may be descriptive of a current state of the industrial plant and optionally what this may mean in the current context.

The user support output may comprise a representation of suggested user actions associated with the plant operation. For example, a textual output may be provided to the user, e.g. suggesting to take a manual intervention and/or to trigger, e.g. via the GUI, an automatic intervention.

The user support output may comprise a query response responsive to a user query associated with the plant operation. For example, a user query may comprise one or more descriptions and/or questions, for example about the state of the plant, change of the state of the plant, what it means and/or what actions to take. The user query may be input, for example, via a chat interface of the Neural generative model, which may optionally be part of the GUI.

The control output configured to control automated actions associated with the plant operation may, for example, output indicating to a control device of the industrial plant to control plant operation in a manner specified in the control output, e.g. to automatically change settings of pieces of equipment, open or close valves, start up or shut down pieces of equipment, or the like.

Known techniques for retrieval augmented generation, RAG, may be employed. This can include, but is not limited to interaction with vector stores, graph-databases, agent/tool concepts, Text-to-Query approaches building SQL/whisper and/or other retrieval commands and/or vision-based retrieval techniques (cf. ColPali).

A knowledge base associated with the plant operation may, for example, be represented by vectors, e.g. provided in a vector store, and/or may be provided as a knowledge graph. Further details are provided below. This may include the application of an approach to generate a joint embedding space - which can happen on text level (cf. word2vec), document level (Latend Dirichlet Allocation, Latent Semantic Analysis) of approaches using pretrained language models (e.g., BERT, T5). Especially also image embeddings (e.g. via ImageNet), Multimodal embeddings, graph embeddings, structured data embeddings may be employed.

In some aspects of the present disclosure, the first output is generated based exclusively on a visual stream of the GUI, in particular the image data. In particular, for example, no operational data or engineering data may be used for generating the first output. This even more improves the flexibility and data protection potential described above.

In this context, the visual stream of the GUI may comprise the image data of a plurality of frames of the GUI and optionally metadata associated therewith, such as timestamps or the like.

In some aspects of the present disclosure, one or more local instances of the multi-modal Neural generative model is used for generating the first output, second output and/or support output and/or control output.

In some aspects of the present disclosure, the image data is processed only at a local instance of the multi-modal Neural generative model and, optionally, wherein other data than the image data, including the first output data, are processed at a/the local instance of the multi-modal Neural generative model and/or at a cloud-based instance of the multi-modal Neural generative model.

A local instance of an Neural generative model has the advantage that the above aspect of data protection can be further improved.

The image data reveal a lot of information about the industrial plant and process, as such, in terms of data protection, it may be advantageous to process the image data at a local instance of the Neural generative model.

In some examples, the second output and/or support output may be generated using a local instane of the multi-modal Neural generative model. Since the second output employs RAG, the RAG may employ also sensitive data without risk of exposing data. As such, as not only generic data but also plant-specific data can be employed without risk, while maintaining data security, the output can be made more precise for the specific industrial plant.

In addition, as explained initially, sometimes a fast response is important, e.g. in case of alarms. Relying on local instances may allow for control over availability over access to the instance of the Neural generative model and also to not have to rely on data transmission, thereby allowing for better ensuring short response times.

In some aspects of the present disclosure, the method comprises generating the control output and further comprises controlling one or more actions associated with the plant operation based on the control output, in particular without requiring prior user confirmation.

There may be issues arising in plant operation that raise warning or alarms. While some may indeed require manual intervention, it is also possible that the analysis by the Neural generative model leads to the result that automated intervention is sufficient. Generating the control output and controlling actions associated with the plant operation based on the control output allows for taking some burden of the user, as they may not have to intervene at all, i.e. the actions may be carried out fully automatically, or only need to confirm the actions, in response to which the actions may be carried out automatically.

It will be understood that by addressing some situations based on the control output automatically, the user has more capacity to address issues that actually do require user intervention, even without needing the knowledge or experience to identify these issues, which makes the overall process more reliable.

In some aspects of the present disclosure, the control output comprises a process state change request, the method comprising automatically issuing the process state change request to a control component controlling the plant operation.

Process state change requests may include , for example, interacting with an asset of the plant, e.g. modifying a setpoint to change the state of a valve a tank or the rpm of a motor. Alternatively or in addition, itmay, for example, comprise switching to a redundant system, asking for shutting down an asset, and/or restarting an asset. The requests can have different temporal dimensions like "immediately", "in the next hour", "during the shift", "soon".

It will be understood that these tasks can be carried out in an automated manner, so the claimed method's processing of the GUI by the Neural generative model and thereby automatically enabling, via the control output, to take care of this task, improves reliability. For example, this is due to the method not having to rely on a user's judgement, experience, and knowledge, and the possibility of being carried out without delay as compared to waiting for a user to take action.

In some aspects of the present disclosure, the method comprises generating and/or updating operational context data, in particular a context object, based on the first output, and optionally the second output and/or the knowledge base, and providing the context data as input for the multi-modal Neural generative model and/or outputting a representation of the context data to the user, particularly as part of a query response and/or automatically independently of a user query.

For example, operational context data may comprise data that brings together past states, current states, state changes, user actions, and/or conclusions drawn from one or more of them. The context may be a (particularly unified) collection of asset states and their interrelation. Context may be based on event/alarm data, telemetry data (sensor readings), optionally combined with the basic judgement of normal, abnormal behavior, knowledge of potential actions and their consequences to the system which is derived from engineering documents, operator handbooks and/or other plant-related and process operation related information sources (e.g. shift notes, operator logs, ...).

In some aspects of the present disclosure, the method comprises configuring and outputting a user interface to the user based on the first output and/or the second output and/or the support output.

In some aspects, configuring and outputting the user interface may comprise generating suggested user actions, in particular a prompt for a user to confirm issuing a process state change request to a/the control component controlling the plant operation. Alternatively or in addition, configuring and outputting the user interface may comprise generating a query response associated with the plant operation responsive to a user query. Alternatively or in addition, configuring and outputting the user interface may comprise modifying the plant monitoring graphical user interface, GUI, to provide and/or identify information potentially relevant for user actions.

For example, the user interface may be a modified plant monitoring and control graphical user interface, GUI, wherein portions are highlighted and/or hidden and/or rearranged and/or supplemented with tags or symbols and/or wherein alarms are removed and/or highlighted, and/or wherein a user is prompted to confirm an automated action and/or wherein a user is prompted to carry out certain actions.

As another example, the user interface may comprise a chat window allowing for the user to interact with the Neural generative model, i.e., input prompts and view Neural generative model output. THe user interface, e.g. chat window, may be output separately or as part of the plant monitoring and control graphical user interface, GUI. The chat window may allow for iterative interaction, wherein the user may provide additional input, e.g. in the form of prompts, to the Neural generative model and receive new output from the Neural generative model in response thereto.

It is noted that providing the user interfaces described above improves overall reliability of plant operation, as the appropriate actions by the user are less reliant on knowledge and experience of the user.

In some aspects of the present disclosure, the method comprises automatic output of the support output to the user and/or outputting support output to the user in response to a user query input into the multimodal Neural generative model.

Automatic output may be any output that was not specifically requested by a user, e.g. via a prompt. An automatic output may be, for example in the form notifications and/or pup-up windows and/or an interactive icon, the user may select to obtain more information. Alternatively or in addition, an automatic output may comprise automatic highlighting of a portion of the GUI and/or displaying of a symbol, which may optionally be a user interactive icon, e.g. indicating a warning and/or that additional information is available.

The user query may, in particular, be user input into the Neural generative model, e.g. via a chat window. The user query may be in the form of a prompt.

Output in response to a user query may, for example, be output in a chat that allows user interaction with the Neural generative model, particularly the user to provide input to the Neural generative model. Alternatively or in addition, one or more of the other outputs described above may be output in response to the user query, e.g. pop-ups, highlights, symbols, or the like.

Optionally, there may be settings determining whether to enable automatic output and/or under which circumstances to allow automatic output.

In some aspects of the present disclosure, the knowledge base comprises shift logs, operator actions from audit trail, and/or work procedures.

Alternatively or in addition, in some aspects of the present disclosure, the knowledge base comprises technical specification of one or more pieces of equipment of the industrial plant plant. For example, such specifications may comprise equipment type, properties of the pieces of equipment, or the like. Information of this type may, for example, stem from parts lists and/or specifications of equipment manufacturers and/or engineering data for the industrial plant.

Alternatively or in addition, in some aspects of the present disclosure, the knowledge base comprises operation specification of one or more pieces of equipment of the industrial plant. For example, operation specification may comprise ranges for operating parameters, alarm levels, signal levels, or the like. Information of this type may, for example, stem from parts lists and/or specifications of equipment manufacturers and/or engineering data for the industrial plant.

Alternatively or in addition, in some aspects of the present disclosure, the knowledge base comprises specification of relations and/or interactions between pieces of plant equipment of the industrial plant. For example, such relations may specify components that are expected to be found connected to each other or interacting in a specific way. For example, relations and/or interactions may specify that valves, piping, or pumps are provided in interaction with a specific piece of equipment and/or that specific monitoring devices are provided for monitoring a specific piece of equipment. Information of this type may, for example, stem from parts lists and/or specifications of equipment manufacturers and/or engineering data for the industrial plant or for other industrial plants and/or based on domain knowledge.

Alternatively or in addition, in some aspects of the present disclosure, the knowledge base comprises technical specification of oner or more processes of the industrial plant.

Information of this type may, for example, stem from engineering data for the industrial plant and process or for other industrial plants and processes and/or based on domain knowledge.

Alternatively or in addition, in some aspects of the present disclosure, the knowledge base comprises specifications of one or more potential alarms associated with operation of the industrial plant, in particular alarms associated with operation of one or more pieces of equipment of the industrial plant. For example, there may be specific alarm levels associated with pieces of equipment and alarms may be issued depending on these alarm levels.

Information of this type may, for example, stem from parts lists and/or specifications of equipment manufacturers and/or engineering data for the industrial plant or for other industrial plants and/or based on domain knowledge.

In some aspects of the present disclosure, the multi-modal Neural generative model is a transformer-based model, in particular a transformer-based model without domain-specific training. In particular, generative pre-trained transformer models may be employed. The multi-modal Neural generative model, in particular, may be configured to process input comprising image data and text data and may be configured to output at least text data and/or control data.

The above is advantageous as the method can be applied in a versatile manner and deployed quickly and without the significant technical effort of training the model. Moreover, providing user support output is a language-related task, and Neural generative models are powerful tools allowing for a user to intuitively interact with the model. This further increases reliability, as the user, even without extensive experience, can obtain information required for correct user intervention in a very targeted manner (e.g. as opposed to searches carried out in specifications or online).

Optionally generative models allowing for generation of image data, such as diffusion-based models, may be employed for providing support output including generated image data, such that, for example, instructions may be provided not only in textual form but also supplemented with graphical information.

The present disclosure also provides a data processing system comprising one or more processing components configured to carry out the method of the present disclosure, particularly as described above.

The present disclosure also provides a computer program product comprising instructions which, when the program is executed by a computer, cause the computer to carry out the method of the present disclosure, particularly as described above.

The present disclosure also provides a computer-readable medium comprising instructions which, when executed by a computer, cause the computer to carry out the method of the present disclosure, particularly as described above.

The features and advantages outlined above in the context of the method similarly apply to the processing system, the computer program product, and the computer-readable medium described herein.

Further features, examples, and advantages will become apparent from the detailed description making reference to the accompanying drawings.

### BRIEF DESCRIPTION OF THE DRAWINGS

In the accompanying drawings,
Fig. 1 is a flowchart illustrating a method according to the present disclosure;
Fig. 2 illustrates a schematic representation of data processing system according to the present disclosure;
Fig. 3 is an example for an "operator in the loop" configuration according to the present disclosure;
Fig. 4 is an example for a "no operator in the loop" configuration according to the present disclosure;
Fig. 5 is an example for an "operator in the loop" configuration with only a local instance of an Neural generative model;
Fig. 6 is an example illustrating compatibility of the present method for configurations with multiple different process controls;
Fig. 7 shows exemplary workflow steps for a method according to the present disclosure;
Figs. 8a to 8d illustrate inputs, such screenshots of a GUI at different times, and user outputs, such as text-based pro-active output and reactive output.

### DETAILED DESCRIPTION

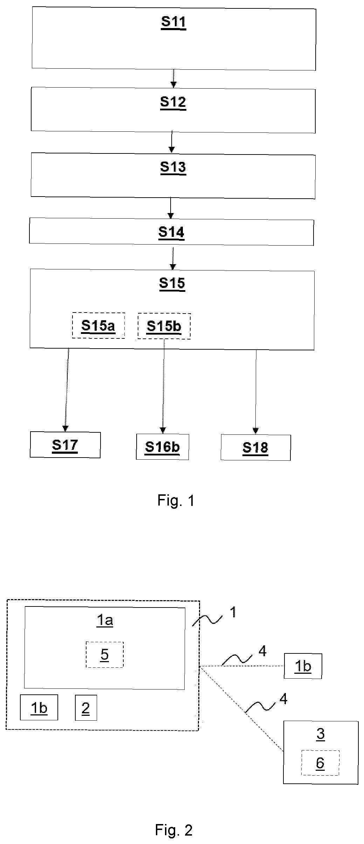

Fig. 1 is a flowchart illustrating a computer-implemented method for industrial plant operation according to the present disclosure.

The method comprises, in step S11, obtaining image data comprising one or more frames, particularly a pluralit of frames, of a plant monitoring and control graphical user interface, GUI, for an industrial plant ;

The method comprises, in step S12, inputting the image data into a Neural generative model, for example a multi-modal large language model, LLM. The multi-modal Neural generative model may, for example, be a transformer-based model, in particular a transformer-based model without domain-specific training.

The method comprises, in step S13, generating, based on the image data, a first output comprising an analysis of a change of industrial plant operation as derived from the plurality of frames, including at least a current frame and a previous frame, thereby providing operational context for a present state of the industrial plant. In some examples, the first output is generated based exclusively on a visual stream of the GUI, in particular the image data.

The method comprises, in step S14, the multi-modal Neural generative model generating, based on the first output and optionally the image data, a second output comprising an analysis of the present state of the industrial plant taking into account the operational context.

The method comprises, in step S15, the multi-modal Neural generative model generating output.

For example, the method may comprise, in step S15a, the multi-modal Neural generative model generating user support output including a representation of the analysis result of the analysis of the change and/or present state and/or suggested user actions associated with the plant operation and/or a query response responsive to a user query associated with the plant operation. In some examples, the method comprises automatic output of the support output to the user and/or outputting support output to the user in response to a user query input into the multimodal Neural generative model.

Alternatively or in addition, the method may comprise, in step S15b, the multi-modal Neural generative model generating control output configured to control automated actions associated with the plant operation.

When the method comprises generating the control output, it may further optionally comprise, in step S16b, controlling one or more actions associated with the plant operation based on the control output, in particular without requiring prior user confirmation. The control output may comprise a process state change request, the method comprising automatically issuing the process state change request to a control component controlling the plant operation.

In some examples, one or more local instances of the multi-modal Neural generative model is used for generating the first output, second output and/or support output and/or control output. In an example, the image data is processed only at a local instance of the multi-modal Neural generative model and, optionally, wherein other data than the image data, including the first output data, are processed at a/the local instance of the multi-modal Neural generative model and/or at a cloud-based instance of the multi-modal Neural generative model.

Generating the user support output and/or the control output employs retrieval augmented generation, RAG, using a knowledge base associated with the plant operation. The knowledge base may, for example, include a vector store and/or a knowledge graph. The knowledge base may comprise one or more of shift logs, operator actions from audit trail, work procedures; technical specification of one or more pieces of equipment of the industrial plant; operation specification of one or more pieces of equipment of the industrial plant; specification of relations and/or interactions between pieces of plant equipment of the industrial plant; technical specification of oner or more processes of the industrial plant; specifications of one or more potential alarms associated with operation of the industrial plant, in particular alarms associated with operation of one or more pieces of equipment of the industrial plant.

The method may comprise, in optional step S17, configuring and outputting a user interface to the user based on the first output and/or the second output and/or the support output. Configuring and outputting the user interface may comprise generating suggested user actions, in particular a prompt for a user to confirm issuing a process state change request to a/the control component controlling the plant operation, and/or
generating a query response associated with the plant operation responsive to a user query, and/or modifying the plant monitoring graphical user interface, GUI, to provide and/or identify information potentially relevant for user actions.

In optional step S18, the method may comprise generating and/or updating operational context data, in particular a context object, based on the first output, and optionally the second output and/or the knowledge base, and providing the context data as input for the multi-modal Neural generative model and/or outputting a representation of the context data to the user, particularly as part of a query response and/or automatically independently of a user query.

Fig. 2 shows a data processing system 1 according to the present disclosure, comprising means, for example a processing component, e.g. a processor, 1a, for carrying out the method of the present disclosure, for example one of the methods described above. A memory 1b may be provided as part of and/or connected to the processing system.

Optionally, the system 1 may comprise or be connected to a user interface device 2, wich may be configured for outputting a user interface and optionally for receiving user input, such as a display device.

The system may be connected to external computing resources 3, such as external processing and/or data storage resources, for example cloud-based resources.

Exemplary data connections 4 are shown, which may be wired or wireless, for example.

For the sake of illustration, Fig. 2 shows a local instance 5 of an Neural generative model and a cloud-based instance 6 of an Neural generative model.

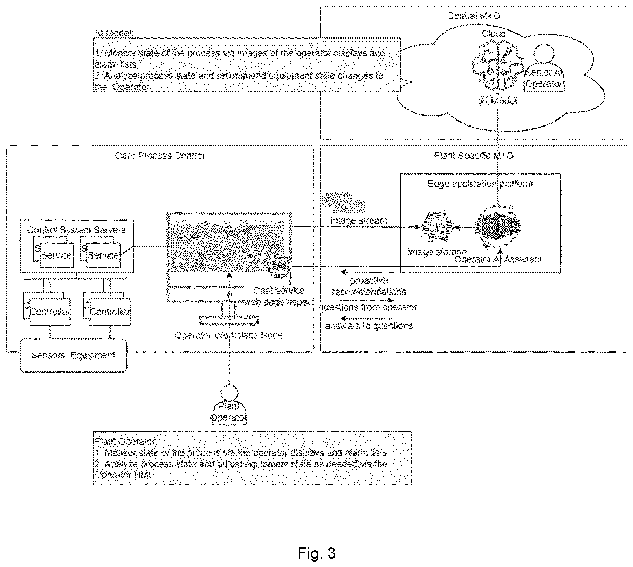

Further features and advantages will be illustrated below making reference to Figures 3 to 8a-8d. Hereinbelow, reference is particularly made to a large language model, LLM, as an example for Neural generative model, yet the considerations and features similarly apply for other Neural generative models.

The methods and systems of the present disclosure address challenges, such as monitoring of complex technical equipment via a user interface, e.g. a complete plant via an operator workplace, may be very challenging and complex, particularly when this involves judging changes. For example, the user (also referred to as operator) needing to decide whether and/or which of multiple potentially concurrent scenarios, such as two new prio 2 alarms and a dropping tank level, are really problematic and require intervention. Reliability can be jeopardiued, for example as it depends on the user's knowledge and experience.

It will be understood that the methods and system of the present disclosure allow for efficient Situation monitoring for technical equipment using multi-modal Neural generative models, such as large language models, and situation-based information retrieval.

The methods and systems allow for proactive and reactive support to users, e.g. operators. that need to monitor complex technical equipment, systems or plants based on a user interface. For example, the methods and systems may give proactive and reactive information about operating a technical equipment under consideration of a live status and a knowledge base. The methods and systems use multi modal large language models and a knowledge base, e.g. to generate support for the user.

Technical equipment can be monitored using a monitor of technical equipment based on a visual stream of the GUI of the system, particularly on frames of the GUI. By focusing (in some examples exclusively) on the visual stream/GUI frames, the system can easily be integrated with a variety of systems. For example, the integration effort can happen solely on the UI level. The methods and systems can be agnostic to the specific control system of an industrial plant, e.g., may thus not require any engineering or data integration.

Optionally, in some aspects, by constantly updating a context object based on the latest UI changes, queries against the knowledge base and optionally other services can be much more targeted.

The LLMs allow for outputting text descriptions to support a user, optionally in response to a specific user query. This may be helpful for any user not well acquainted with the industrial plant and/or GUI, such as new or infrequent users or maintenance personnel. The methods and systems allow for them to quickly understand the state of the plant even if they are not familiar with the particular GUI screens in this particular installation.

It is noted that use of LLMs may also allow for output being provided in any suitable language or in several language, which may further increase reliability. For example, the user may query the output in their native tongue. This may avoid errors based on lacking language skills. Alternatively, the LLMs output may be translated automatically with suitable software tools.

For example, a description of the situation and/or text of the description on how to solve issues can be provided in and/or translated into other natural languages for those users who might better understand a different language than the one that the general GUI elements (e.g. operator displays) and/or documentation are written in.

Outputs generated by the LLM may allow to modify the GUI, for example to specifically draw a user's attention to important things like anomalies, state changes and process variables outside of desired values.

Different examples of the method of the present disclosure are illustrated in Figures 3 to 6.

Figure 3 may be considered to be an "operator in the loop" example. An LLM receive a GUI image stream from the operator workplace and optionally user prompts, such as questions, via a chat interface. In return, the LLM provides proactive recommendations and/or responses to the prompts, e.g. answers to the questions. In this example, two instances, one local and one cloud-based are shown merely for the sake of illustration. Other configurations, e.g. with only a local or only a cloud-based instance, are conceivable.

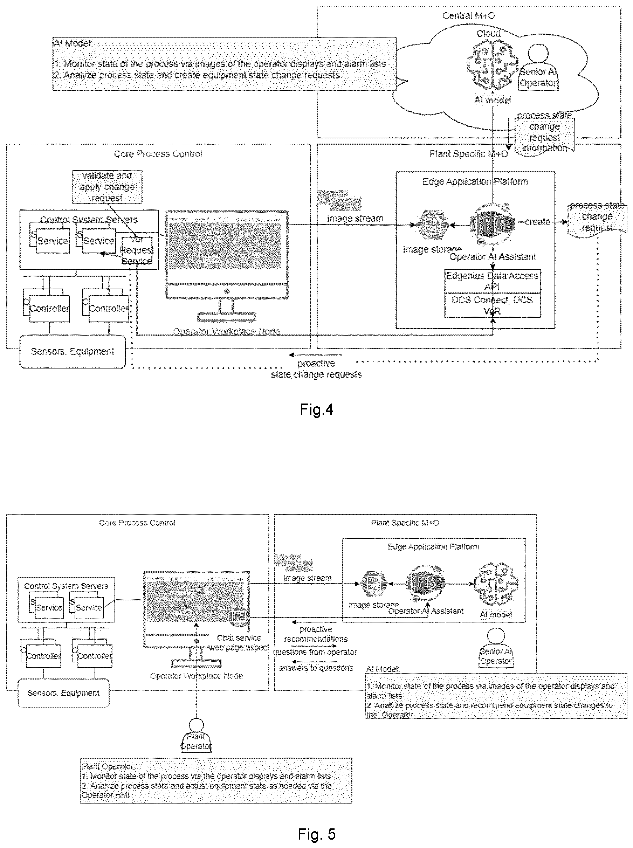

Figure 4 may be considered to be a "no operator in the loop" example. As will be seen here, the LLM creates and proactively provides state change requests to the control system. No user involvement is required. Other configurations, e.g. with only a local or only a cloud-based instance, are conceivable.

It is to be understood that a combination of the examples of Figure 3 and Figure 4 is conceivable, i.e. a user may interact with the LLM and optionally receive proactive recommendations, and it may also be possible that the LLM issues proactive state change requests to the control system.

Figure 5 illustrates an "operator in the loop" example with only a local instance of an LLM.

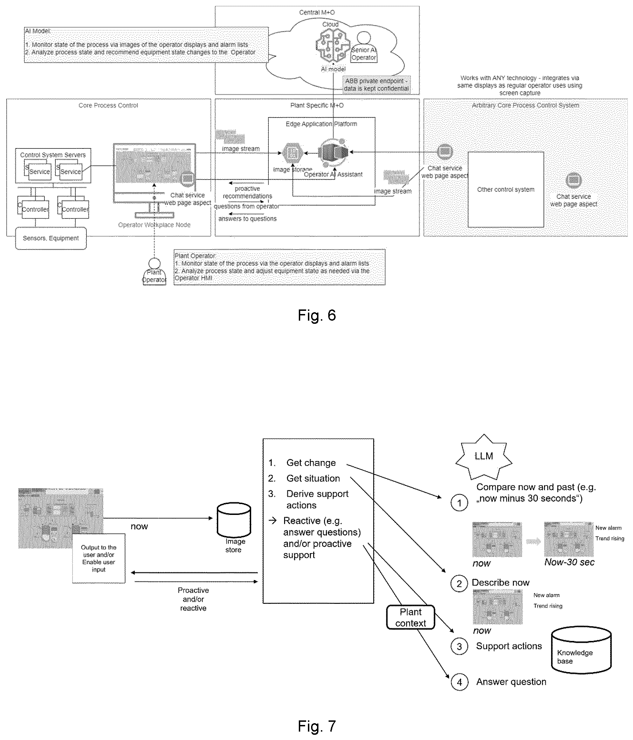

Figure 6 illustrates that multiple different process controls can be used an integrated with the LLM. That is, the methods and systems can be very flexibly applied and do not rely on a specific process control configuration.

Figure 7 shows exemplary workflow steps for a method according to the present disclosure.

As indicated on the left, an image of the GUI interface of the present time ("now") is provided to an image store, which also comprises images of past GUI interfaces. Optionally, a user may provide user input, e.g. a question or prompt concerning the industrial system and process, such what an alarm means or what process state a piece of equipment is in, for example.

Based on images from the image store, a change can be determined from GUI images representing the present time ("now") and the past (e.g. "now minus 30 seconds"), the LLM may determine information about a change and about the present situation. Using plant context, e.g. the information about the present and the change, and information from a knowledge base, the LLM may determine support actions, which may be output to a user (proactive and/or reactive) and may be used to control operation of the industrial plant.

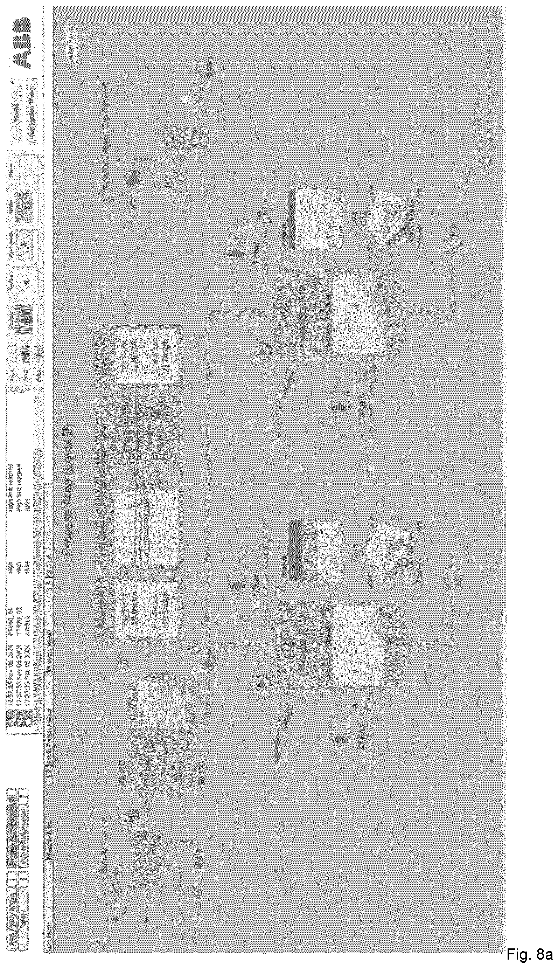

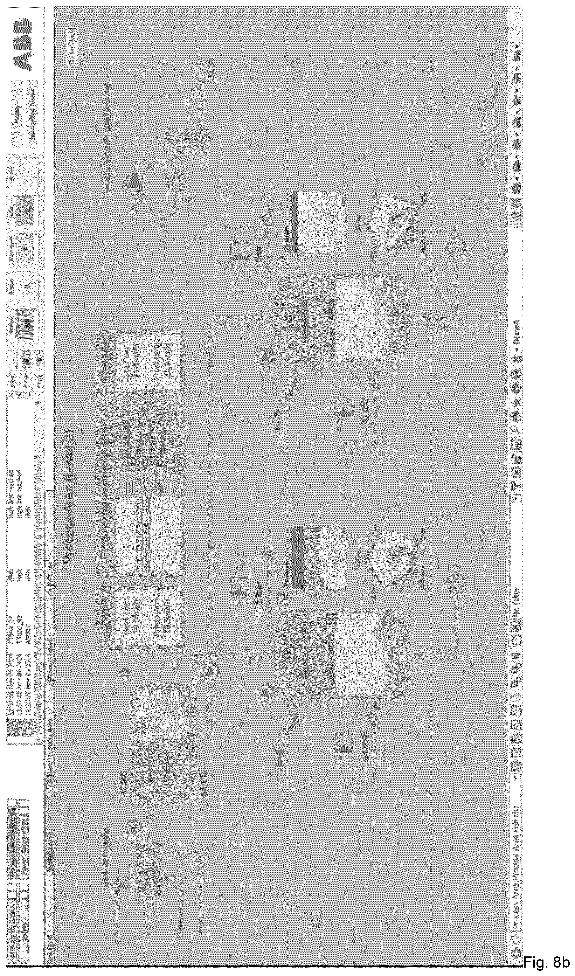

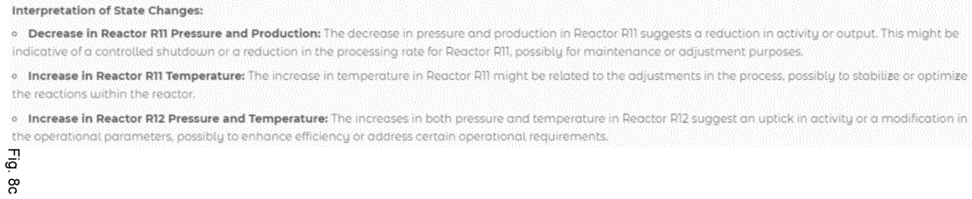

Figures 8a and 8b depict GUIs at two different times. Figure 8c illustrates an (exemplarily proactive) output from the LLM, which may be provided to a user, for example. The output provides an interpretation of different state changes, e.g. decrease in reactor R11 pressure and production, increase in reactor R11 temperature, increase in reactor R12 pressure and temperature. Thus, without having to conduct any extensive research, a user is informed that decrease in pressure and production may be indicative of a controlled shutdown, that increase in the temperature may be related to adjustments in the process, or that increase in pressure and temperature may suggest an uptick of activity or modification in operational parameters.

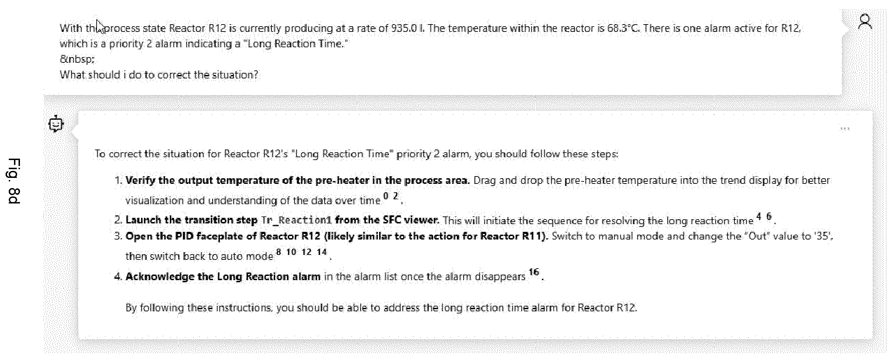

Figure 8d depicts an example of a reactive output, with a chat window depicting a user input, e.g. user prompt, here in the form of a description of what the user observed (current production rate, current temperature, alarm active with priority 2 and indicating a long reaction time) and the question what the user should do to correct the situation. The figure also depicts a responsive LLM output suggesting steps a user should carry out to correct the situation (e.g. verify output temperature, launch the transition step, open the PID faceplate, acknowledge long reaction alarm).

Thus, from this illustrative example, it will be understood that a process is made more efficient and reliable by the method of the present invention, as it does not depend on a user's knowledge or research to carry out adequate user interventions. The method assists the user in performing a technical task by means of a continued and/or guided human-machine interaction process, particularly independently of the user's preferences, as the output is based on additional information, context and insight otherwise not available to the user.

The output in a chat window may be one way of providing such guidance, which may be advantageous considering that this is often functionality already provided by LLM-based software solutions, thereby easy and efficient to incorporated, but other renderings similarly achieve the technical effect.

While the invention has been illustrated and described in detail in the drawings and foregoing description, such illustration and description are to be considered exemplary and not restrictive. The invention is not limited to the disclosed embodiments. In view of the foregoing description and drawings it will be evident to a person skilled in the art that various modifications may be made within the scope of the invention, as defined by the claims.

## Claims

1. A computer-implemented method for industrial plant operation, the method comprising
obtaining (S11) image data comprising a plurality of frames of a plant monitoring and control graphical user interface, GUI, for an industrial plant;
inputting (S12) the image data into a multi-modal Neural generative model; the multi-modal Neural generative model generating (S13), based on the image data, a first output comprising an analysis of a change of industrial plant operation as derived from the plurality of frames, including at least a current frame and a previous frame, thereby providing operational context for a present state of the industrial plant;
the multi-modal Neural generative model generating (S14), based on the first output and optionally the image data, a second output comprising an analysis of the present state of the industrial plant taking into account the operational context;
the multi-modal Neural generative model generating (S15a, S15b):
user support output including: a representation of the analysis result of the analysis of the change and/or present state and/or suggested user actions associated with the plant operation and/or a query response responsive to a user query associated with the plant operation, and/or
control output configured to control automated actions associated with the plant operation,
wherein generating the user support output and/or the control output employs retrieval augmented generation, RAG, using a knowledge base associated with the plant operation.

2. The method of claim 1, wherein the first output is generated based exclusively on a visual stream of the GUI, in particular the image data.

3. The method of claim 1 or 2, wherein one or more local instances of the multi-modal Neural generative model is used for generating the first output, second output and/or support output and/or control output.

4. The method of claim 3, wherein the image data is processed only at a local instance of the multi-modal Neural generative model and, optionally, wherein other data than the image data, including the first output data, are processed at a/the local instance of the multi-modal Neural generative model and/or at a cloud-based instance of the multi-modal Neural generative model.

5. The method of any of the preceding claims, wherein the method comprises generating the control output and further comprises controlling one or more actions associated with the plant operation based on the control output, in particular without requiring prior user confirmation.

6. The method of claim 5, wherein the control output comprises a process state change request, the method comprising automatically issuing the process state change request to a control component controlling the plant operation.

7. The method of any of the preceding claims, comprising generating and/or updating operational context data, in particular a context object, based on the first output, and optionally the second output and/or the knowledge base, and providing the context data as input for the multi-modal Neural generative model and/or outputting a representation of the context data to the user, particularly as part of a query response and/or automatically independently of a user query.

8. The method of any of the preceding claims, comprising configuring and outputting a user interface to the user based on the first output and/or the second output and/or the support output.

9. The method of any of claim 8, wherein configuring and outputting the user interface comprises:
generating suggested user actions, in particular a prompt for a user to confirm issuing a process state change request to a/the control component controlling the plant operation, and/or
generating a query response associated with the plant operation responsive to a user query, and/or
modifying the plant monitoring graphical user interface, GUI, to provide and/or identify information potentially relevant for user actions.

10. The method of any of the preceding claims, wherein the method comprises automatic output of the support output to the user and/or outputting support output to the user in response to a user query input into the multimodal Neural generative model.

11. The method of any of the preceding claims, wherein the knowledge base comprises one or more of:
Shift logs, operator actions, such as from an audit trail, and/or work procedures,
technical specification of one or more pieces of equipment of the industrial plant,
operation specification of one or more pieces of equipment of the industrial plant,
specification of relations and/or interactions between pieces of plant equipment of the industrial plant,
technical specification of oner or more processes of the industrial plant,
specifications of one or more potential alarms associated with operation of the industrial plant, in particular alarms associated with operation of one or more pieces of equipment of the industrial plant.

12. The method of any of the preceding claims, wherein the multi-modal Neural generative model is a transformer-based model, in particular a transformer-based model without domain-specific training, and/or wherein the multi-modal Neural generative model is a large language model, LLM.

13. A data processing system (1) comprising one or more processing components (1a) configured to carry out the method of any of claims 1 to 12.

14. A computer program product comprising instructions which, when the program is executed by a computer, cause the computer to carry out the method of any of claims 1 to 12.

15. A computer-readable medium comprising instructions which, when executed by a computer, cause the computer to carry out the method of any of claims 1 to 12.
